# EUROPEAN PATENT SPECIFICATION

(11) **EP 0 491 332 B1**
(45) Date of publication and mention of the grant of the patent: **27.03.1996**
(21) Application number: 91121551.5
(22) Date of filing: 16.12.1991
(51) Int. Cl.: B29C 45/27, B29C 45/30

(54) **Multi-cavity melt distribution manifold**
Schmelzeverteilerblock für mehrere Formhöhlungen
Bloc de distribution de matière fondue pour des cavités multiples

(30) Priority: 19.12.1990 CA 2032396
(43) Date of publication of application: 24.06.1992
(73) Proprietor: MOLD-MASTERS LIMITED, Georgetown Ontario L7G 4X5 (CA)
(72) Inventor: Knudsen, Jerry A., St. Charles, Illinois 60174 (US)
(74) Representative: Grünecker, Kinkeldey, Stockmair & Schwanhäusser Anwaltssozietät

(56) References cited:
- EP-A- 0 262 490
- EP-A- 0 457 166
- DE-A- 2 114 465
- FR-A- 2 548 582
- GB-A- 1 200 326
- US-A- 3 940 224

## Description

### BACKGROUND OF THE INVENTION

The invention relates generally to injection molding and more particularly to an improved multi-cavity melt distribution manifold.

Heated manifolds which distribute melt from a single inlet to a number of spaced outlets are well known in the art. It is also well known that the length and size of the melt passage through the manifold must be equal or balanced and that sharp corners or bends can produce unacceptable shear stress in the melt. For instance, U.S. patent number 4,609,138 to Harrison which issued September 2, 1986 shows a drill and plug method of making manifolds. This method has the disadvantage that it is difficult to provide bends in the melt passage without sharp corners. U.S. patent number 4,648,546 to Gellert which issued March 10, 1987 describes making a manifold out of composite plates in which the melt passage is machined. While this does provide for the melt passage having smoothly curved bends, it has the disadvantage that leakage can result if there are a large number of cavities and very high pressures are required to fill the cavities.

These problems are overcome by using a number of manifolds in a balanced bridging arrangement as shown in U.S. patent number 4,761,343 to Gellert which issued August 2, 1988. However, this has the disadvantage that a number of different manifolds are required. A manifold which does provide a melt passage with smoothly curved bends and a number of radially spaced outlets by casting is shown in Gellert Canadian patent application serial number 2,017,055 filed May 17, 1990 entitled "Injection Molding Cast Manifold."

### SUMMARY OF THE INVENTION

Accordingly, it is an object of the present invention to at least partially overcome the problems of the prior art by providing a single melt distribution manifold with a melt passage having smoothly curved bends which branches in two different parallel planes to a large number of spaced outlets.

To this end, in one of its aspects, the invention provides a heated injection molding melt distribution manifold having a rear face, a forward face, and a melt passage which extends therethrough and branches therein from a single common inlet on the rear face to a plurality of spaced outlets on the forward face, having the improvement wherein the melt passage has an inlet portion extending from the inlet on the rear face to a first transverse plane wherein the inlet portion of the melt passage branches to at least four spaced intermediate portions of the melt passage, each intermediate portion of the melt passage extending from the first transverse plane to a second transverse plane wherein each intermediate portion branches to eight spaced outlet portions of the melt passage, each outlet portion of the melt passage extending from the second transverse plane to one of the outlets on the forward face of the manifold, the melt passage extending an equal distance between the common inlet on the rear face of the manifold and each of the spaced outlets on the forward face of the manifold.

Further objects and advantages of the invention will appear from the following description, taken together with the accompanying drawings.

### BRIEF DESCRIPTION OF THE DRAWINGS

Figure 1 is a partial sectional view of a multi-cavity injection molding system having a melt distribution manifold according to a first embodiment of the invention;
Figure 2 is a sectional view along line 2 - 2 in Figure 1, and
Figure 3 is an isometric view showing the two plate portions of the manifold before they are brazed together.

### DETAILED DESCRIPTION OF THE DRAWINGS

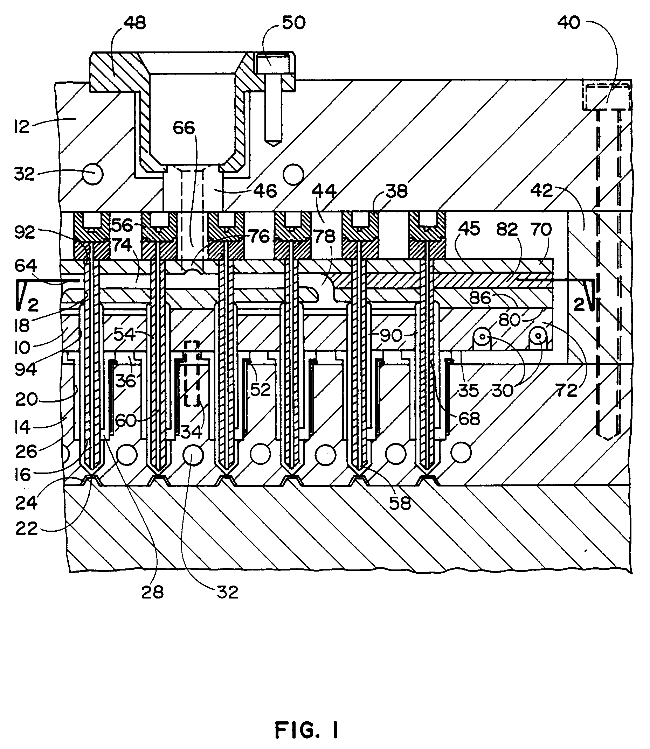

Reference is first made to Figure 1 which shows part of a multi-cavity injection molding system having a heated melt distribution manifold 10 according to a preferred embodiment of the invention extending between a backplate 12 and a cavity plate 14. The system has a number of spaced heated probes 16, each of which extends through a bore 18 through the manifold 10 and into a well 20 which extends in the cavity plate 14 to a gate 22 leading to one of the cavities 24. The probe 16 is accurately located by a locating sleeve 26 which is seated in the well 20 and has three radially spaced fins 28 which contact the probe, similar to that shown in Gellert U.S. patent number 4,820,147 which issued April 11, 1989. The manifold 10 is heated by an electrical heating element 30 with external terminals 31 which is integrally cast into it as described in the U.S. patent number 4,688,622 to Gellert which issued August 25, 1987. The cavity plate 14 and the back plate 12 are cooled by pumping cooling water through conduits 32. The manifold 10 is located by a central locating ring 34 which is seated between the forward face 35 of the heated manifold 10 and the cooled cavity plate 14 and provides an insulative air space 36 between them. The back plate 12 is held securely against the rear end 38 of the probes 16 by bolts 40 which extend through a spacer plate 42 into the cavity plate 14. This similarly provides an insulative air space 44 between the rear face 45 of the heated manifold 10 and the cooled back plate 12. A manifold extension 46 is secured in place by a locating collar 48 which is fastened to the back plate 12 by bolts 50. A thermocouple 52 extends into one of the fins 28 to monitor the temperature of the melt flowing past it.

Each probe 16 has a generally cylindrical steel body 54 with an enlarged portion 56 at the rear end 38 and a pointed forward end 58 which is in alignment with one of the gates 22 leading to a cavity 24. An electrically insulated heating element 60 extends centrally in the body 54 to an external electrical terminal (not shown), as described in detail in Gellert Canadian patent application serial number 2,032,728-6 filed December 19, 1990 entitled "Injection Molding Probe with Varying Heat Profile."

A melt passage 64 extends through the manifold extension 46 to a common inlet 66 on the rear face 45 of the manifold 10. As described in detail below, it branches in the manifold 10 to a plurality of outlets 68 around the probes 16 on the forward face 35 of the manifold 10, to convey pressurized melt to each of the cavities 24. The manifold 10 is made of a tool steel rear plate portion 70 and a tool steel forward plate portion 72. The rear plate portion 70 has lateral holes 74 which are drilled in a first transverse plane parallel to the forward and rear faces 35, 45 of the manifold. In this embodiment, these lateral holes 74 are drilled in an H - shaped configuration, but they can have other balanced configurations. These lateral holes 74 branch to connect a single inlet portion 76 of the melt passage 64 which is drilled from the rear face 45 to four equally spaced intermediate portions 78 of the melt passage 64 which are drilled from the forward face 80 of the rear plate portion 70 of the manifold 10. Steel plugs 82 which are machined to provide a smoothly curved bend in the melt passage are then brazed in the lateral holes 74, as described in U.S. patent number 4,609,138 referred to above.

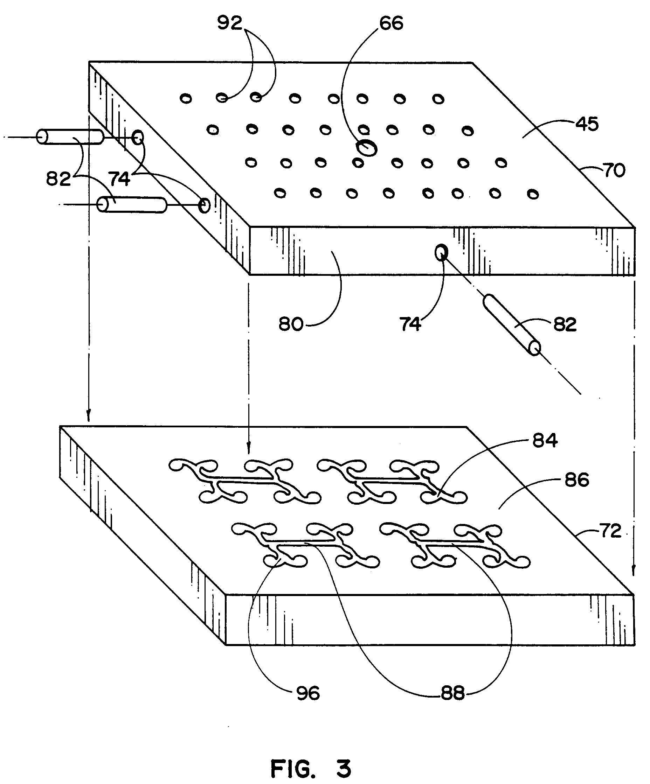

As best seen in Figure 3, matching grooves 84 are machined in the rear face 86 of the forward plate portion 72 and the forward face 80 of the rear plate portion 70 of the manifold 10. As shown, in this embodiment, there are four sets 88 of the matching grooves 84. When the two plate portions 70, 72 are brazed together to form the manifold 10, as described in U.S. patent number 4,648,546 referred to above, each set 88 of machined grooves 84 branch in a second transverse plane to connect one of the intermediate portions 78 of the melt passage 64 to eight equally spaced outlet portions 90 of the melt passage 64 which extend to each of the outlets 68 on the forward face 35 of the manifold 10. As can be seen, the grooves 84 are machined to have smoothly curved bends to minimize the stress on the pressurized melt flowing through the melt passage 64.

The bores 18 which are machined through the manifold 10 to receive the probes 16 each have a rear portion 92 and a forward portion 94. The rear portion 92 extends through the rear plate portion 70 of the manifold 10 and has a diameter just large enough to snugly receive one of the elongated probes 16 therethrough without allowing leakage of the pressurized melt between them. The forward portion 94 of each bore 18 extends through the forward plate portion 72 of the manifold 10 and is sufficiently larger in diameter than the rear portion 92 to provide the outlet portion 90 of the melt passage 64 along around the probe 16 which extends therethrough.

Thus, the melt passage 64 in the manifold 10 has a configuration where it branches laterally twice in two different transverse planes. First, the single inlet portion 76 branches to four intermediate portions 78. Then, each intermediate portion 78 branches to eight outlet portions 90. Thus, in this embodiment, the heated manifold 10 distributes the melt from the single inlet 66 to thirty two spaced outlets 68 to convey the melt to thirty two different cavities 24. If the melt passage branches to all thirty two outlets in the single transverse plane where the rear and forward plate portions join in a system such as shown in U.S. patent number 4,648,546 mentioned above, it has been found that there can be melt leakage along the potential fault line where the two plate portions are brazed together. This is due to the high injection pressure of the melt which can be as high as 50,000 psi in some instances. Having the melt passage branch in two different transverse planes with each set 88 of grooves 84 leading to only eight outlet portions 90 overcomes this leakage problem. Of course, if a different drilling and plugging configuration is used in the rear plate portion 70 to provide the melt passage 64 with more than four intermediate portions 78, the melt passage can have a greater number of outlets.

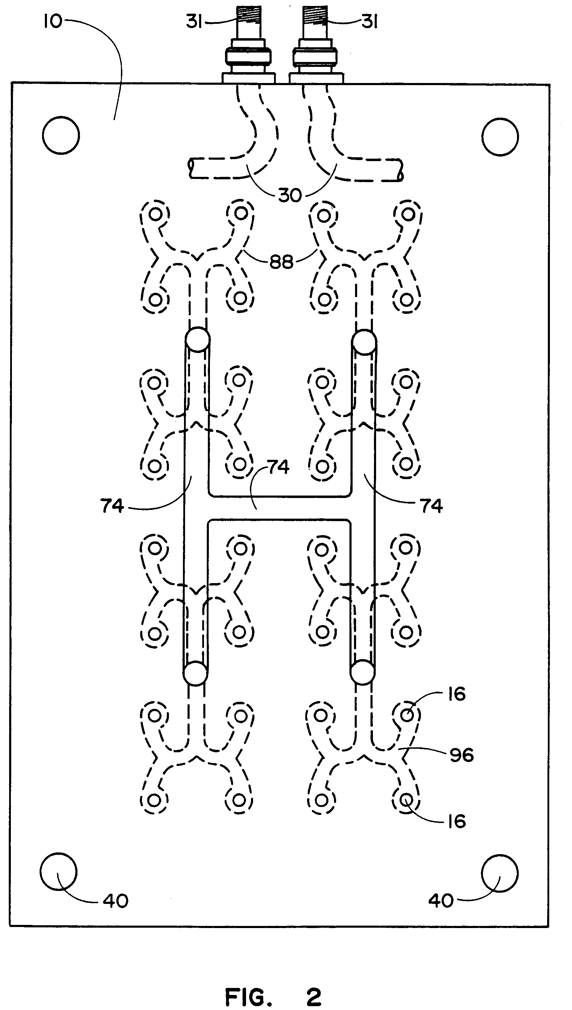

In use, the injection molding system or apparatus is assembled as shown in Figure 1. Electrical power is applied to the heating element 30 in the manifold 10 and the heating element 60 in each probe 16 to heat them to a predetermined operating temperature. Pressurized melt from a molding machine (not shown) is then injected into the melt passage 64 through the common inlet 66 according to a predetermined cycle in a conventional manner. The pressurized melt flows through the heated manifold 10, first branching in the first transverse plane to the four intermediate portions 78, and then branching in the second transverse plane to the thirty two outlet portions 90. The melt then flows along around each heated probe 16 and through the gates 22 to fill the cavities 24. Each set 88 of grooves 84 are machined to form eight curved portions 96 of the melt passage 64 which extend along the second transverse plane where the rear and forward plate portions 70, 72 are brazed together to extend from each intermediate portion 78 to eight spaced outlet portions 90 which can be arranged in two or more rows. Each of the curved portions 96 is substantially smaller in diameter than the forward portion 94 of the bore 18 which provides each outlet portion 90 of the melt passage 64 along around one of the probes 16. As seen in Figure 2, the curved portion 96 is somewhat offset to one side of the probe 16 where it joins the forward portion 94 of the bore 18. This imparts a swirling spiral motion to the melt as it flows through the outlet portion 90 of the melt passage 64 along around the heated probe 16 to the gate 22. The swirling spiral motion of the melt reduces the possibility of dead spots behind the probe in the melt passage and provides for faster colour and material changes.

After the cavities are filled, injection pressure is held momentarily to pack and then released. After a short cooling period, the mold is opened to eject the molded products. After ejection, the mold is closed and injection pressure is reapplied to refill the cavities 24. This cycle is continuously repeated with a frequency dependent on the size and shape of the cavities and the type of material being molded.

While the preferred embodiment of the manifold 10 is shown and described as receiving heated probes 16, it can also be used with heated nozzles mounted to abut against the forward face 35 of the manifold 10 instead. In that arrangement, each bore 18 would only extend through the forward plate portion 72 of the manifold 10 to form an outlet portion 90 of the melt passage 64 extending into a central bore through each heated nozzle leading to the gate 22.

While the description of the heated manifold has been given with respect to preferred embodiments, it is not to be construed in a limiting sense. Variations and modifications will occur to those skilled in the art. For instance, the branching configuration of the melt passage in each of the two transverse planes can be different to provide different arrays of outlets 68 for different applications. Reference is made to the appended claims for a definition of the invention.

## Claims

1. A unitary injection molding distribution manifold (10) which branches at only two transverse planes to provide at least thirty-two outlets from a single common inlet (66), comprising:
(1) two brazed-together plates (70,72) forming a unitary distribution manifold having a first plate with a rear face and a second plate with a forward face and first and second spaced-apart transverse planes which extend parallel to and lie between the rear and forward faces;
(2) a single melt passage (64) extending generally longitudinally in the manifold from the rear face to the forward face having:
(a) an unbranched, single, common inlet portion (76) extending longitudinally from an inlet on the rear face to the first transverse plane where the melt passage branches in that transverse plane to at least four spaced-apart, unbranched first transverse plane passages (74);
(b) at least four spaced-apart, unbranched intermediate portions (78), each of which extends longitudinally from one respective first transverse plane passage to the second transverse plane where the melt passage branches in that second transverse plane to at least thirty-two second unbranched transverse plane passages (88);
(c) at least thirty-two spaced-apart, unbranched outlet portions (68), each of which extends longitudinally from one respective second transverse plane passage to a respective outlet (22) on the forward face; and
wherein the melt passage extends an equal distance between the inlet and each outlet.

2. An injection molding manifold as claimed in claim 1 having a plurality of spaced bores, each bore extending through the manifold from the rear face to the forward face to receive an elongated heated probe therethrough, each bore having a rear portion and a forward portion, the rear portion of each bore extending from the rear face of the manifold to the second transverse plane and having a diameter to snugly receive the elongated probe therein, the forward portion of each bore providing one of the outlet portions of the melt passage extending from the second transverse plane to one of the outlets on the forward face of the manifold, the forward portion of each bore being larger in diameter than the rear portion of the bore and the heated probe extending through the bore, whereby the outlet portion of the melt passage extends along around the heated probe extending through the forward portion of the bore.

3. An injection molding manifold as claimed in claim 2 wherein each intermediate portion of the melt passage branches to at least eight curved portions of the melt passage, each of the curved portions extending in the second transverse plane to the forward portion of a respective one of the probe receiving bores, the curved portion of the melt passage being substantially smaller in diameter than the forward portion of the bore, the curved portion of the melt passage joining the forward portion of the bore being offset to one side of the heated probe extending through the bore to impart a swirling motion to melt flowing from the curved portion of the melt passage into the forward portion of the bore around the heated probe extending therethrough.

## Patentansprüche

1. Aus einem Stück bestehender Spritzgieß-Verteilerblock (10), der sich in nur zwei Querebenen verzweigt, so daß wenigstens 32 Auslasse aus einem einzelnen gemeinsamen Einlaß (66) entstehen, der umfaßt:
(1) zwei miteinander hartverlötete Platten (70,72), die einen aus einem Stück bestehenden Verteilerblock bilden, der eine erste Platte mit einer Rückseite und eine zweite Platte mit einer Vorderseite sowie eine erste und eine zweite, beabstandete Querebene aufweist, die sich parallel zu der Rück- und der Vorderseite erstrecken und zwischen selbigen lieen;
(2) einen einzelnen Schmelzekanal (64), der sich im allgemeinen in Längsrichtung in dem Verteilerblock von der Rückseite zu der Vorderseite erstreckt und der aufweist:
(a) einen unverzweigten, einzelnen gemeinsamen Einlaßabschnitt (76), der sich in Längsrichtung von einem Einlaß an der Rückseite zu der ersten Querebene erstreckt, wo sich der Schmelzekanal in dieser Querebene in wenigstens vier beabstandete, nichtverzweigte Kanäle (74) der ersten Querebene verzweigt;
(b) wenigstens vier beabstandete, nichtverzweigte Zwischenabschnitte (78), die sich jeweils in Längsrichtung von einem entsprechenden Kanal der ersten Querebene zu der zweiten Querebene erstrecken, wo sich der Schmelzekanal in dieser zweiten Querebene in wenigstens 32 nichtverzweigte Kanäle (88) der zweiten Querebene verzweigt;
(c) wenigstens 32 beabstandete, nichtverzweigte Auslaßabschnitte (68), die sich jeweils in Längsrichtung von einem entsprechenden Kanal der zweiten Querebene zu einem entsprechenden Auslaß (22) an der Vorderseite erstrecken; und
wobei sich der Schmelzekanal über eine gleiche Strecke zwischen dem Einlaß und jedem Auslaß erstreckt.

2. Spritzgießverteiler nach Anspruch 1 mit einer Vielzahl beabstandeter Bohrungen, wobei sich jede Bohrung von der Rückseite zur Vorderseite durch den Verteiler erstreckt und eine längliche beheizte Sonde darin aufnimmt, wobei jede Bohrung einen hinteren Abschnitt und einen vorderen Abschnitt aufweist, wobei sich der hintere Abschnitt jeder Bohrung von der Rückseite des Verteilers zur zweiten Querebene erstreckt und einen Durchmesser aufweist, aufgrund dessen die längliche Sonde enganliegend darin aufgenommen wird, der vordere Abschnitt jeder Bohrung einen der Auslaßabschnitte des Schmelzekanals bildet, der sich von der zweiten Querebene zu einem der Auslasse an der Vorderseite des Verteilers erstreckt, der vordere Abschnitt jeder Bohrung einen größeren Durchmesser als der hintere Abschnitt der Bohrung und die beheizte Sonde, die sich durch die Bohrung erstreckt, aufweist, so daß sich der Auslaßabschnitt des Schmelzekanals um die beheizte Sonde herum erstreckt, die sich durch den vorderen Abschnitt der Bohrung erstreckt.

3. Spritzgießverteiler nach Anspruch 2, wobei sich jeder Zwischenabschnitt des Schmelzekanals in wenigstens acht gekrümmte Abschnitte des Schmelzekanals verzweigt, sich jeder der gekrümmten Abschnitte in der zweiten Querebene zum vorderen Abschnitt einer entsprechenden der die Sonden aufnehmenden Bohrungen erstreckt, der gekrümmte Abschnitt des Schmelzekanals einen im wesentlichen kleineren Durchmesser als der vordere Abschnitt der Bohrung aufweist, der gekrümmte Abschnitt des Schmelzekanals, der in den vorderen Abschnitt der Bohrung übergeht, zu einer Seite der beheizten Sonde hin versetzt ist, die sich durch die Bohrung erstreckt, um Schmelze, die von dem gekrümmten Abschnitt des Schmelzekanals in den vorderen Abschnitt der Bohrung um die beheizte Sonde, die sich durch selbige erstreckt, herum fließt, in Wirbelbewegung zu versetzen.

## Revendications

1. Bloc de distribution monobloc pour moulage par injection (10) qui se divise uniquement sur deux plans transversaux pour fournir au moins trente-deux sorties à partir d'une admission commune unique (66), comprenant :
(1) deux plaques (70, 72) brasées ensemble formant un bloc de distribution monobloc comportant une première plaque avec une face arrière et une seconde plaque avec une face avant et des premier et second plans transversaux séparés qui s'étendent parallèlement aux faces arrière et avant et se situent entre elles;
(2) un passage unique pour matière fondue (64) s'étendant généralement de manière longitudinale dans le bloc de distribution depuis la face arrière vers la face avant comportant :
(a) une partie commune d'admission unique monocorps (76) s'étendant longitudinalement à partir d'une admission sur la face arrière vers le premier plan transversal où le passage pour matière fondue se divise dans ce plan transversal en au moins quatre passages séparés monocorps de premier plan transversal (74);
(b) au moins quatre parties intermédiaires séparées monocorps (78), chacune d'entre elles s'étendant longitudinalement à partir d'un passage respectif de premier plan transversal vers le second plan transversal où le passage pour matière fondue se divise dans ce second plan transversal en au moins trente-deux passages monocorps de second plan transversal (88);
(c) au moins trente-deux parties de sortie séparées monocorps (68), dont chacune s'étend longitudinalement à partir d'un passage respectif de second plan transversal vers une sortie respective (22) sur la face avant; et
dans lequel le passage pour matière fondue s'étend sur une distance égale entre l'admission et chaque sortie.

2. Bloc de distribution pour moulage par injection comme revendiqué dans la revendication 1 comportant une pluralité d'alésages séparés, chaque alésage s'étendant au travers du bloc de distribution à partir de la face arrière vers la face avant pour recevoir dans celui-ci une sonde chauffée allongée, chaque alésage comportant une partie arrière et une partie avant, la partie arrière de chaque alésage s'étendant à partir de la face arrière du bloc de distribution vers le second plan transversal et ayant un diamètre destiné à recevoir commodément dans celui-ci la sonde allongée, la partie avant de chaque alésage fournissant une des parties de sortie du passage pour matière fondue s'étendant depuis le second plan transversal vers une des sorties sur la face avant du bloc de distribution, la partie avant de chaque alésage ayant un diamètre supérieur à celui de la partie arrière de l'alésage et la sonde chauffée passant dans l'alésage, par lequel la partie de sortie du passage pour matière fondue s'étend le long et autour de la sonde chauffée qui passe au travers de la partie avant de l'alésage.

3. Bloc de distribution pour moulage par injection comme revendiqué dans la revendication 2 dans lequel chaque partie intermédiaire du passage pour matière fondue se divise en au moins huit parties courbes du passage pour matière fondue, chacune des parties courbes s'étendant dans le second plan transversal vers la partie avant d'un des alésages respectifs de réception de sonde, la partie courbe du passage pour matière fondue ayant essentiellement un diamètre inférieur à celui de la partie avant de l'alésage, la partie courbe du passage pour matière fondue en contact avec la partie avant de l'alésage étant décalée vers un côté de la sonde chauffée passant dans l'alésage afin d'imprimer un mouvement tourbillonnant à la matière fondue s'écoulant depuis la partie courbe du passage pour matière fondue dans la partie avant de l'alésage autour de la sonde chauffée qui passe dans celui-ci.
